# EUROPÄISCHE PATENTANMELDUNG

(11) **EP 1 068 798 A2**
(43) Veröffentlichungstag der Anmeldung: **17.01.2001**
(21) Anmeldenummer: 00115356.8
(22) Anmeldetag: 15.07.2000
(51) Int. Cl.: A01K 23/00

(54) **Vorrichtung zur Aufnahme von Haustierkot**

(30) Priorität: 16.07.1999 DE 19933361
(71) Anmelder: Preis, Sebastian, 92339 Beilngries (DE)
(72) Erfinder: Preis, Sebastian, 92339 Beilngries (DE)
(74) Vertreter: Helms, Joachim, Dipl.-Ing. Patentanwalt

(57) **Zusammenfassung**

Vorrichtung zur Aufnahme von Hundekot, umfassend eine Stange (12) mit einer an einem Ende (14) der Stange angeordneten, flexiblen Aufnahmeeinrichtung (16), wobei die Aufnahmeeinrichtung mittels einer Bedienungseinrichtung (18) von einer ebenen Fläche (20) zu einem Beutel (22) verformbar ist.

## Beschreibung

Die Erfindung betrifft eine Vorrichtung zur Aufnahme von Haustierkot gemäß dem Oberbegriff des Anspruchs 1.

Haustiere, insbesondere Hunde erfreuen sich großer Beliebtheit. Allerdings entstehen, insbesondere in den Städten, durch den anfallenden Hundekot nicht unbeachtliche Probleme. Verschmutze Gehwege oder Grünflächen, insbesondere Kinderspielplätze, sind nicht nur ein ästhetisches Ärgernis, sondern bilden ebenfalls eine Gesundheitsgefahr.

Es wurden daher in der Vergangenheit immer wieder Versuche hinsichtlich einer hygienischen Entsorgung des Hundekots unternommen. Allerdings nur mit wenig Erfolg.

So sind z. B. Schaufeln aus Pappe bekannt, mit denen der Hundekot aufgesammelt werden kann. Diese Schaufeln können z.B. aus Automaten bezogen werden oder müssen beim Spaziergang mit dem Hund mitgeführt werden. Dies ist umständlich, da zum einen nicht immer das erforderliche Kleingeld zur Verfügung steht oder zum anderen die Schaufeln einfach vergessen werden. Weiter ist das Aufsammeln des Hundekots mittels dieser Schaufeln relativ unhygienisch und schwierig, weil sich der Hundehalter bücken muß, was insbesondere bei älteren Menschen nicht möglich sein kann. Aus diesem Grunde haben sich derartige Pappschaufeln nicht durchgesetzt, so daß das Hundekot-Problem weiter besteht.

Aus der US-PS 5540469 ist eine Aufsammelvorrichtung für Hundekot bekannt, die einen wegwerfbaren, flexiblen Beutel umfaßt, der in einem vorne offenen, hohlen Rahmen angeordnet wird. Das offene Ende des Beutels wird um das offene Ende des Rahmens gewickelt und mittels eines elastischen Bandes befestigt, um zu verhindern, daß das offene Ende des Rahmens mit dem Hundekot in Berührung kommt, wenn der Hundekot in den Beutel gesammelt wird.

Aus der US-PS 5568955 ist weiter eine Vorrichtung zum Aufsammeln von Hundekot bekannt, die aus einem umstülpbaren Handschuh besteht.

Die genannten Vorrichtungen weisen im wesentlichen die gleichen Nachteile wie die oben beschriebenen Pappschaufeln auf.

Es ist daher Aufgabe der vorliegenden Erfindung, eine Vorrichtung zur Aufnahme von Hundekot zu schaffen, mit der eine hygienische bequeme Aufnahme des Hundekots und eine einfache Entsorgung desselben an einer geeigneten Stelle ermöglicht wird.

Diese Aufgabe wird durch die Inanspruch 1 gekennzeichnete Erfindung gelöst. D.h. durch eine Vorrichtung zur Aufnahme von Hundekot, gekennzeichnet durch eine Stange mit einer an einem Ende der Stange angeordneten, flexiblen Aufnahmeeinrichtung, wobei die Aufnahmeeinrichtung mittels einer Bedienungseinrichtung von einer ebenen Fläche zu einem Beutel verformbar ist.

Mit einer derartigen Vorrichtung ist es möglich, den Hundekot unmittelbar unter dem Hund aufzunehmen und dann zu entsorgen. D.h., in dem Moment, wenn sich der Hund zum Koten niederhockt, wird die Aufnahmeeinrichtung mittels der Bedienungseinrichtung zu einer ebenen Fläche geformt und unter dem Hund angeortnet. Danach wird die ebene Fläche mittels der Bedienungseinrichtung zu einem dem Hundekot enthaltenden Beutel geformt, der an einer geeigneten Stelle wieder durch Öffnen des Beutels zu einer ebenen Fläche mittels der Bedienungseinrichtung geleert werden kann.

Auf diese Weise ist eine bequeme und hygienische Entsorgung des Hundekots möglich, ohne in irgendeiner Weise mit dem Hundekot in Berührung zu kommen oder sich bücken zu müssen.

Vorteilhafte Ausgestaltungen der Erfindung ergeben sich aus den Unteransprüchen.

So ist vorgesehen, daß die Bedienungseinrichtung ein rings um den Umfang der Aufnahmeeinrichtung angeordnetes, relativ zum Umfang bewegbares flexibles Seil umfaßt, daß mit einem oder beiden Enden an der Stange bewegbar angeordnet ist.

Durch die Relativbewegung des Seils zur Aufnahmeeinrichtung wird ein einfaches und zuverlässiges Öffnen und Schließen der Aufnahmeeinrichtung gewährleistet. Dabei kann das Seil mit seinen beiden Enden oder nur mit einem Ende, wobei das andere Ende an der Stange befestigt ist, relativ zur Stange bewegt werden.

Um eine leichte Bedienung zu gewährleisten, ist gemäß einer weiteren Ausführungsform der Erfindung vorgesehen, daß die Stange eine Führung zum Verschieben des Seils relativ zu der Stange aufweist.

Zweckmäßigerweise ist an dem Seil eine Betätigungseinrichtung vorgesehen, um das Seil längs der Stange zu verschieben.

Gemäß einer weiteren vorteilhaften Ausgestaltung der Erfindung ist vorgesehen, daß die Stange rohrförmig ausgebildet ist. Hierdurch wird das Gewicht der Vorrichtung vermindert und weiter kann gemäß einer weiter vorteilhaften Ausgestaltung der Erfindung, das Seil in der Stange angeordnet werden, wobei sich die Betätigungseinrichtung durch eine sich durch die Stange in Längsrichtung erstreckende Führung nach außen erstreckt. Hierdurch wird eine Beschädigung des Seils, ein Hängenbleiben an der Kleidung oder ein Verrosten des Seils verhindert.

Eine weitere vorteilhafte Ausgestaltung der Erfindung sieht vor, daß die Stange teleskopisch ausgebildet ist. Dies erleichtert das Mitführen der Vorrichtung.

Dadurch, daß die Aufnahmeeinrichtung aus einer allgemeinen runden Bahn aus flexiblen Material besteht und am Umfang einen an das Ende der Stange mündenden Kanal zur Aufnahme des flexiblen Seils aufweist, wird eine sichere Verformung der Aufnahmeeinrichtung zwischen der ebenen Fläche und dem Beutel sichergestellt.

Das Material der Aufnahmeeinrichtung kann aus einem flexiblen Gewebe oder einer Kunststoffolie bestehen, wobei eine Kunststoffolie aus Gründen der Reinigung bevorzugt wird.

Um eine Relativbewegung zwischen dem Seil und der Aufnahmeeinrichtung zu gewährleisten, ist gemäß einer weiteren vorteilhaften Ausgestaltung der Erfindung die Bahn am Ende der Stange mit der Stange verbunden.

Bei einer weiteren Ausführungsform der Erfindung ist die Stange als Spazierstock ausgebildet und weist an ihrem unteren Ende einen Kasten zur Anordnung der Aufnahmeeinrichtung auf. In diesem Fall kann die Vorrichtung unauffällig mitgeführt werden.

Ausführungsbeispiele der Erfindung sind in der Zeichnung dargestellt und werden im folgenden näher beschrieben. Es zeigen:
- Fig. 1: eine perspektivische Ansicht der Vorrichtung im geöffneten Zustand;
- Fig. 2: eine perspektivische Ansicht der Vorrichtung im geschlossenen Zustand;
- Fig. 3.: eine Schnittansicht der Vorrichtung im geöffneten Zustand.
- Fig. 4: eine weitere Ausführungsform der Erfindung im geschlossenen Zustand; und
- Fig. 5: die Ausführungsform gemäß Fig. 4 im geöffneten Zustand.

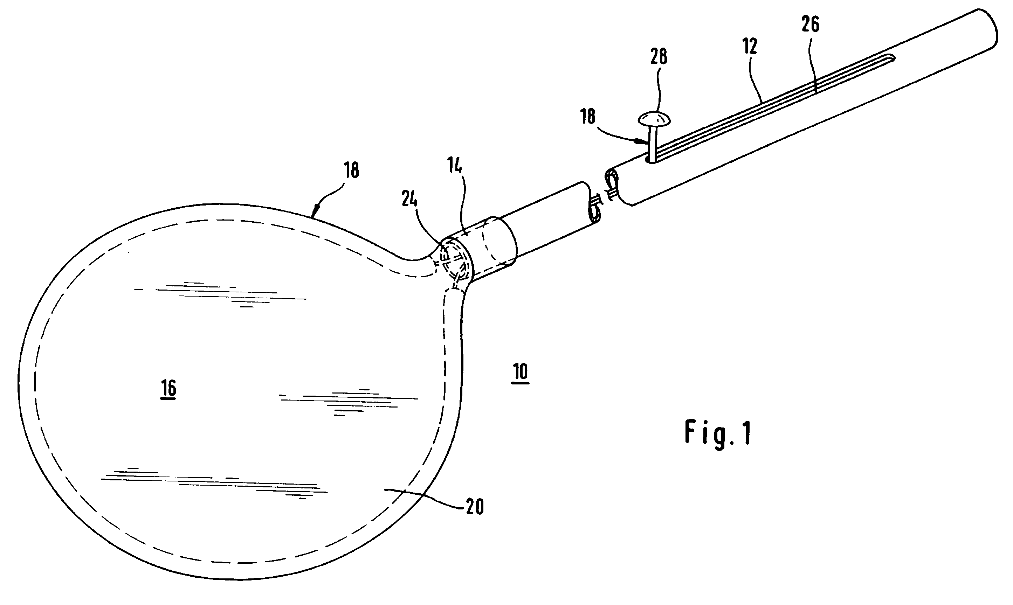

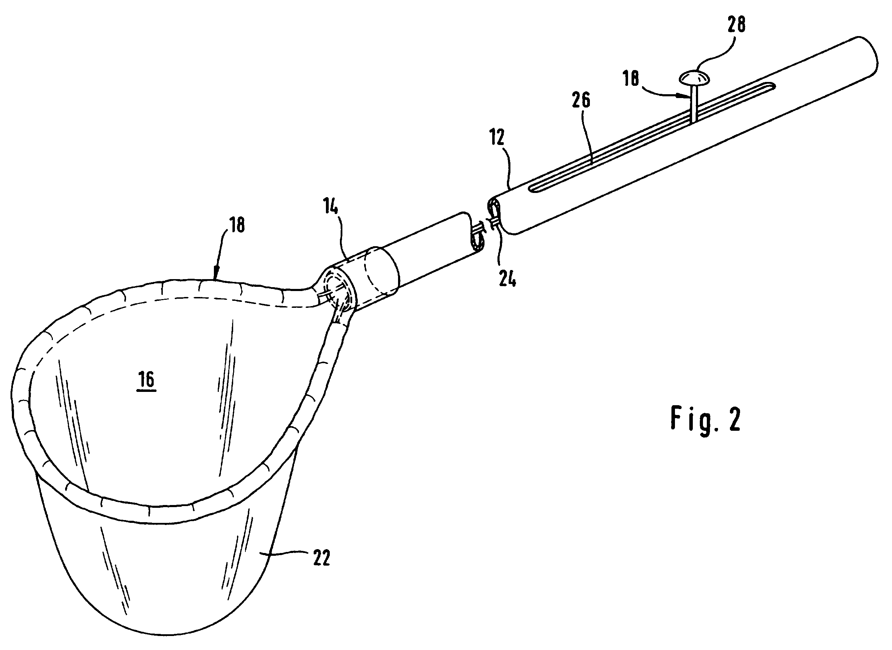

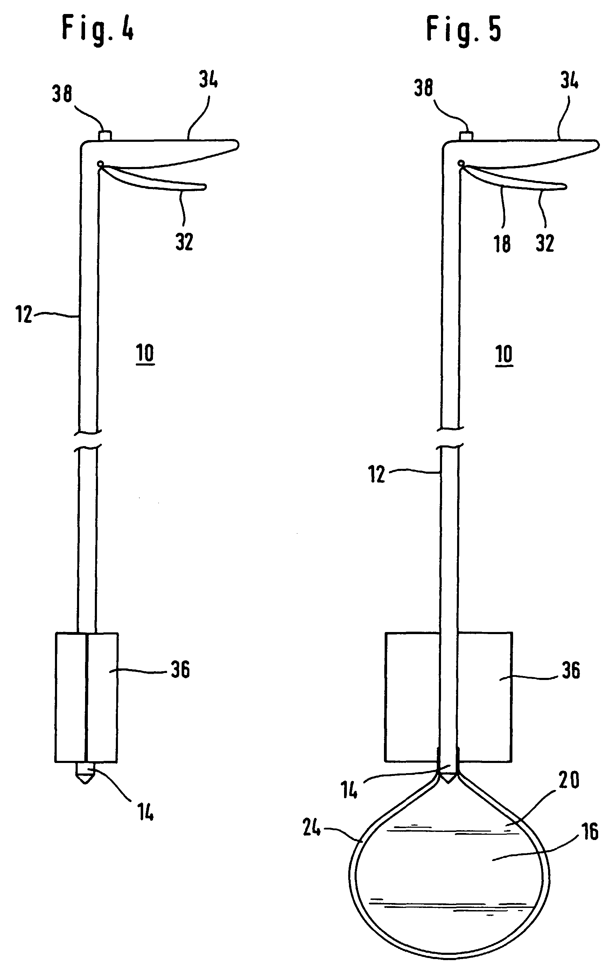

Wie in den Fig. 1 - 3 dargestellt, umfaßt die Vorrichtung zur Aufnahme von Hundekot 10 eine Stange 12 mit einer an einem Ende 14 der Stange 12 angeordneten, flexiblen Aufnahmeeinrichtung 16. Die Aufnahmeeinrichtung 16 ist mittels einer Bedienungseinrichtung 18 von einer ebenen Fläche 20 zu einem Beutel 22 verformbar. Die Bedienungseinrichtung 18 besteht im wesentlichen aus einem ringsum dem Umfang der Aufnahmeeinrichtung 16 angeordnetes, relativ zum Umfang bewegbares, flexibles Seil 24, das mit einem oder beiden Enden an der Stange 12 bewegbar angeordnet ist. Zum Verschieben des Seils 24 ist an dem Seil eine Betätigungseinrichtung 28, zum Beispiel ein Stift, ein Steg, Knopf oder Ähnliches vorgesehen, die in einer Führung bzw. einem Schlitz 26 der Stange 12 geführt wird. Es ist ebenfalls möglich, die Bedienungseinrichtung in Form eines Bowdenzuges auszuführen, der mittels eines Handgriffs 32 (s. Fig.4 u. 5) am freien Ende der Stange 12 bedient wird. In diesem Fall ist es zweckmässig, in der Aufnahmeeinrichtung 16 eine Feder, z.B. ein am Umfang angeordneten Federdraht, vorzusehen, die die Aufnahmeeinrichtung in Richtung der ebenen Fläche 20 vorspannt. Durch Betätigen des Handgriffs 12 wird die ebene Fläche 20 zu dem Beutel 22 verformt und durch Loslassen des Handgriffs 12 öffnet sich der Beutel 22 selbstätig durch die Federkraft wieder zu der ebenen Fläche 20.

In dem dargestellten Ausführungsbeispiel ist das Seil 24 innerhalb der Stange 12, die als Rohr ausgebildet ist, angeordnet. Es ist jedoch ebenfalls möglich, das Seil 24 außerhalb der Stange 12 in einer entsprechenden Führung (Bowdenzug) anzuordnen.

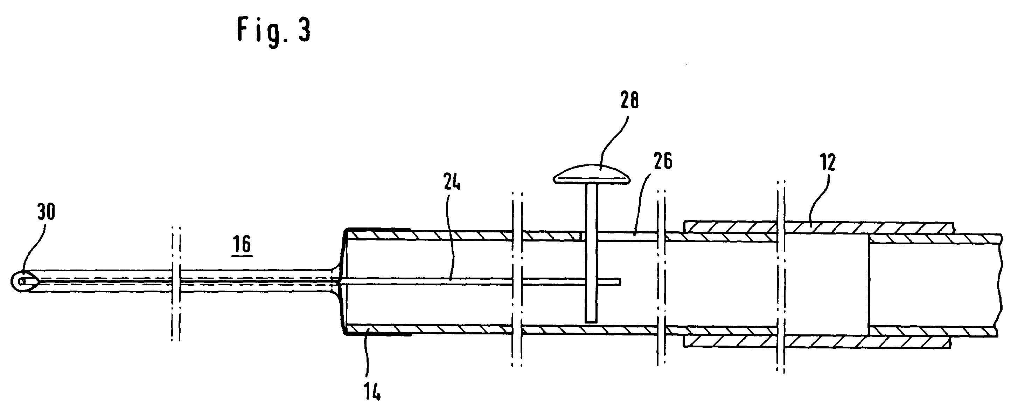

Wie in Fig. 3 dargestellt, ist die Stange 12 vorzugsweise teleskopisch ausgebildet.

Die Aufnahmeeinrichtung 16 besteht aus einer allgemein runden Bahn. Es ist jedoch ebenfalls jede andere zu einem Beutel verformbare Form möglich. Die Bahn besteht aus einem flexiblen Material und weist am Umfang einen an das Ende 14 der Stange 12 mündenden Kanal 30 (Saum) auf. Im Falle der dargestellten rohrförmigen Stange 12 mündet der Kanal 30 in das Innere der Stange 12, damit das Seil 24 innerhalb der Stange 12 geführt wird. Das Material der Aufnahmeeinrichtung 16 ist entweder eine flexible Gewebebahn oder eine Kunststoff-Folie, wobei die Kunststoff-Folie aus Gründen der Reinigung bevorzugt wird. Der am Umfang der Aufnahmeeinrichtung 16 ausgebildete Kanal 30 wird durch Umschlagen der Peripherie der Bahn und anschließenden Vernähen oder Verkleben mit der Bahn ausgebildet. Die Bahn der Aufnahmeeinrichtung ist mit einem Abschnitt fest mit dem Ende 14 der Stange 12 verbunden.

Durch diese Anordnung ist es möglich, durch eine relative Bewegung des Seils 24 gegenüber der Stange 12 und der Aufnahmeeinrichtung 16 diese nach Wunsch zu öffnen oder zu schließen .

In dem in den Fig. 4 u.5 dargestellten Ausführungsbeispiel ist die Stange 12 als Spazierstock ausgebildet. Am unteren Ende 14 der Stange 12 ist ein Kasten 36 für die Aufnahmeeinrichtung 16 vorgesehen, der mittels eines am Griff 34 des Spazierstocks angebrachten Knopf 38 geöffnet werden kann, so dass die Aufnahmeeinrichtung 16 herausfällt. Durch Betätigen des Handgriffs 32 wird über einen Bowdenzug die ebene Fläche 20 zu dem Beutel 22 verformt. Nach dem Entleeren des Beutels 22 kann dieser wieder in dem Kasten 36 untergebracht werden, woraufhin der Kasten 36 wieder verschlossen wird.

## Patentansprüche

1. Vorrichtung zur Aufnahme von Haustierkot, gekennzeichnet durch eine Stange (12) mit einer an einem Ende (14) der Stange (12) angeordneten, flexiblen Aufnahmeeinrichtung (16), wobei die Aufnahmeeinrichtung (16) mittels einer Bedienungseinrichtung (18) von einer ebenen Fläche (20) zu einem Beutel (22) verformbar ist.

2. Vorrichtung nach Anspruch 1, dadurch gekennzeichnet, daß die Bedienungseinrichtung (18) ein ringsum den Umfang der Aufnahmeeinrichtung (16) angeordnetes, relativ zum Umfang bewegbares flexibles Seil (24) umfaßt, das mit einem oder beiden Enden an der Stange (12) bewegbar angeordnet ist.

3. Vorrichtung nach Anspruch 1 oder 2, dadurch gekennzeichnet, daß die Bedienungseinrichtung einen Bowdenzug umfasst, und daß in der Aufnahmeeinrichtung (16) eine Feder angeordnet ist, die Aufnahmeeinrichtung (16) in Richtung der ebenen Fläche (20) vorspannt.

4. Vorrichtung nach einem der Ansprüche 1 bis 3, dadurch gekennzeichnet, daß die Stange (12) eine Führung (26) zum Verschieben des Seil (24) relativ zu der Stange (12) aufweist.

5. Vorrichtung nach einem der Ansprüche 1 bis 4, dadurch gekennzeichnet, daß an dem Seil (24) eine Betätigungseinrichtung (28) vorgesehen ist.

6. Vorrichtung nach einem der Ansprüche 1 bis 5, dadurch gekennzeichnet, daß die Stange (12) rohrmäßig ausgebildet ist.

7. Vorrichtung nach einem der Ansprüche 1 bis 6, dadurch gekennzeichnet, das die Stange (12) rohrförmig ausgebildet ist.

8. Vorrichtung nach einem der Ansprüche 1 bis 7, dadurch gekennzeichnet, daß das Seil (24) in der Stange (12) angeordnet ist und sich die Betätigungseinrichtung (28) sich durch die Stange (12) in Längsrichtung erstreckenden Führung 26 nach außen erstreckt.

9. Vorrichtung nach einem der Ansprüche 1 bis 8, dadurch gekennzeichnet, daß die Stange (12) teleskopisch ausgebildet ist.

10. Vorrichtung nach einem der Ansprüche 1 bis 9, dadurch gekennzeichnet, daß die Aufnahmeeinrichtung (16) aus einer allgemeinen runden Bahn aus flexiblen Material besteht und am Umfang einen an das Ende (14) der Stange (12) mündenden Kanal (30) sich zur Aufnahme des flexiblen Seils (24) aufweist.

11. Vorrichtung nach einem der Ansprüche 1 bis 10, dadurch gekennzeichnet, daß das Material der Aufnahmeeinrichtung (16) eine flexible Gewebebahn oder Kunststoff-Folie ist.

12. Vorrichtung nach einem der Ansprüche 1 bis 11, dadurch gekennzeichnet, daß die Bahn am Ende (14) der Stange (12) mit der Stange (12) verbunden ist.

13. Vorrichtung nach einem der Ansprüche 1 bis 12, dadurch gekennzeichnet, daß die Stange (12) als Spazierstock ausgebildet ist und an ihrem unteren Ende (14) einen Kasten (36) zur Anordnung der Aufnahmeeinrichtung (16) aufweist.

14. Vorrichtung nach einem der Ansprüche 1 bis 13, dadurch gekennzeichnet, daß der Kasten (36) mittels eines Knopfes (38) am Griff (34) des Spazierstocks geöffnet werden kann.
